# EUROPÄISCHE PATENTANMELDUNG

(11) **EP 1 384 908 A2**
(43) Veröffentlichungstag der Anmeldung: **28.01.2004**
(21) Anmeldenummer: 03015347.2
(22) Anmeldetag: 08.07.2003
(51) Int. Cl.: F16D 3/84

(54) **Achsmanschette**

(30) Priorität: 26.07.2002 DE 10234284; 21.08.2002 DE 10239169
(71) Anmelder: Carl Freudenberg KG, 69469 Weinheim (DE)
(72) Erfinder: Wolf, Joachim, 69469 Weinheim (DE); Kammann, Andreas, 69123 Heidelberg (DE)

(57) **Zusammenfassung**

Eine Achsmanschette (3) zur Gelenkabdichtung, insbesondere am Antriebsstrang von Kraftfahrzeugen weist einen im wesentlichen rotationssymmetrischen Faltenbalg (4) auf, der mit einem Anschlußbund (5) einstückig ausgeführt ist. Der Anschlußbund (5) weist mehrere, nach innen vorspringende Einbuchtungen (5a) auf, die an radiale Vertiefungen (2) der Außenkontur des Gelenkgehäuses (1) angepaßt sind. An der Außenseite des Anschlußbundes (5) sind Ausgleichsstücke (6) angesetzt, die die Außenkontur zu einer zylindrischen Umfangsfläche ergänzen, auf der eine Klemmschelle (7) angeordnet ist.

## Beschreibung

Die Erfindung betrifft eine Achsmanschette zur Gelenkabdichtung, insbesondere am Antriebsstrang von Kraftfahrzeugen, mit einem im wesentlichen rotationssymmetrischen Faltenbalg, der mit einem Anschlußbund einstückig ausgeführt ist, und mit am Anschlußbund verteilt angesetzten Ausgleichsstücken zur Anpassung an eine, mehrere radiale Vertiefungen aufweisende Außenkontur eines Gelenkgehäuses.

Derartige Achsmanschetten dienen dazu, Gelenke im Antriebsstrang von Kraftfahrzeugen abzudichten, deren Gelenkgehäuse eine Außenkontur mit mehreren radialen Vertiefungen aufweist. Da üblicherweise drei radiale Vertiefungen am Umfang vorgesehen sind, ergibt sich eine dreilappige, auch als trilobe-förmig bezeichnete Außenkontur, die gleichzeitig die Schnittstelle zu der üblicherweise durch Klemmen befestigten Achsmanschette darstellt. Die Abdichtung des Gelenkbereichs ist erforderlich, um Schmutz und Feuchtigkeit vom Gelenk fernzuhalten und die Fettfüllung im Gelenk zu erhalten.

Zur Anpassung des Anschlußbundes des Faltenbalgs an die nicht-rotationssymmetrische Außenkontur des Gelenkgehäuses ist es bekannt, bei aus Elastomeren im Spritzgießverfahren hergestellten Achsmanschetten Verdickungen des Anschlußbunds vorzusehen, die als Ausgleichsstücke die Radiusdifferenzen der Außenkontur des Gelenkgehäuses ausgleichen, so dass zur Klemmung eine kreisförmige Klemmschelle verwendet werden kann.

Am Übergang vom Anschlußbund zum Faltenbalg entstehen hierbei an der Innenseite starke Hinterschneidungen. Der verwendete Elastomer-Werkstoff ermöglicht trotz dieser starken Hinterschneidungen eine einfache Entformung, da er ausreichend reversibel dehnbar ist. Dieses Herstellungsverfahren ist jedoch nicht mehr möglich, wenn die Achsmanschette aus einem thermoplastischen Copolyester (TPE) hergestellt werden soll. Dann würde ein Formteil mit so starken Hinterschneidungen bei der Entformung zerstört werden, da es die erforderlichen Dehnungen nicht erträgt. Außerdem bedingt die Ausbildung starker Wanddickenunterschiede bei thermoplastischen Formteilen lange Abkühlzeiten im Werkzeug und führt zu Einfallstellen oder Lunkerbildung am Formteil.

Um diese Schwierigkeiten zu vermeiden, wird bei einer bekannten Achsmanschette (EP 0 924 450 A2) der Anschlußbund zylindrisch ausgeführt. Zur Anpassung an die mit radialen Vertiefungen versehene Außenkontur des Gelenkgehäuses ist ein vom Anschlußbund umgebenes ringförmiges Einlegeteil vorgesehen, das mehrere nach innen ragende Vorsprünge aufweist, die in die radialen Vertiefungen des Gelenkgehäuses passen. Die Achsmanschette kann zwar verhältnismäßig einfach hergestellt werden, weil insbesondere der Anschlußbund eine gleichbleibende Wanddicke hat und keine Hinterschneidungen bilden, die beim Ausformen stören würden. Nachteilig ist jedoch, dass der Faltenbalg oder zumindest sein Anschlußbund in einem zweiten Fertigungsschritt erneut erwärmt werden muss, um die Verbindung mit dem Einlegeteil herzustellen. Dadurch werden die Festigkeit und die Geometrie durch Molekülumlagerungen nachteilig beeinflußt. Außerdem besteht zwischen dem Anschlußbund und dem Einlegeteil eine weitere Fuge, die keine Gebrauchsfunktion hat, aber ebenfalls dichtend ausgelegt werden muss.

Eine solche Fuge wird bei einer Achsmanschette der eingangs genannten Gattung (EP 0 915 264 A2) dadurch vermieden, dass an der Innenseite des Anschlußbundes Ausgleichsstücke einstückig angeformt werden, die in die radialen Vertiefungen des Gelenkgehäuses passen. Die bekannte Achsmanschette ist in einem kombinierten Spritz-Blasverfahren hergestellt, das einen automatisierten Fertigungsablauf ermöglicht. Die Ausgleichsstücke müssen durch radiale Stege ausgesteift werden, um die Klemmkraft zur Verbindung der Achsmanschette mit dem Gelenkgehäuse zu übertragen. Die notwendige Optimierung der Wanddickenverteilung macht etwaige Änderungen der Ausgleichsstücke aufwendig und teuer, weil dafür die Spritzgießform geändert werden muss.

Aufgabe der Erfindung ist es daher, eine Achsmanschette der eingangs genannten Gattung so auszugestalten, dass sie aus TPE, unter Berücksichtigung der materialspezifischen Radbedingungen, herstellbar ist. Außerdem sollen die technischen Schwierigkeiten bekannter Lösungen nicht auftreten.

Diese Aufgabe wird erfindungsgemäß dadurch gelöst, dass der Anschlußbund mehrere nach innen vorspringende Einbuchtungen aufweist, die an die radialen Vertiefungen der Außenkontur des Gelenkgehäuses angepaßt sind, und dass die Ausgleichsstücke an der Außenseite des Anschlußbundes angesetzt sind und dessen Außenkontur zu einer zylindrischen Umfangsfläche ergänzen.

Zwischen der Achsmanschette und dem Gelenkgehäuse besteht nur eine einzige abzudichtende Fuge. Da die Berührungsflächen zwischen dem Anschlußbund und den Ausgleichsstücken an der Außenseite liegen, ist hier keine Abdichtung erforderlich.

Der die Schnittstelle der Achsmanschette zum Gelenkgehäuse bildende Anschlußbund wird unmittelbar beim ersten Fertigungsschritt angeformt. Durch die trilobe-förmige Kontur des Anschlußbundes wird eine unnötige zusätzliche Dichtfläche vermieden. Die bisherigen Werkzeuge für Achsmanschetten aus thermoplastischem Copolyester in radialsymmetrischer Ausführung des Anschlußbundes können nach geringfügiger Änderung zur Herstellung der erfindungsgemäßen Achsmanschetten mit nichtrotationssymmetrischem Anschlußbund eingesetzt werden. Wie schon beim herkömmlichen Verfahren können Wanddickenunterschiede durch die verfügbare Maschinentechnik minimiert werden.

Gleichwohl ist wie bisher die Verwendung einer kreisrunden Klemmschelle möglich, weil die Abstände zur Außenkontur des Anschlußbundes durch an der Außenseite angesetzte Ausgleichsstücke überbrückt werden. Die Ausgleichsstücke übertragen die Klemmkraft von der Klemmschelle auf den Anschlußbund und damit auf die abzudichtende Fuge. Eine dichte Verbindung der Ausgleichsstücke mit dem Anschlußbund ist nicht erforderlich.

Gemäß einer Ausführungsform der Erfindung ist vorgesehen, dass die Umfangslänge jedes Anschlußstücks angenähert der Umfangslänge der zugeordneten radialen Vertiefung entspricht. Die Anschlußstücke bestehen hierbei aus mehreren, von einander getrennten und in Umfangsabstand zueinander angeordneten Bauteilen.

Um den Montageaufwand bei der Kraftfahrzeugfertigung zu verringern, können alle Anschlußstücke zusammenhängend als ein sich um den gesamten Umfang des Anschlußbundes erstreckendes einstückiges Bauteil ausgeführt sein. Dadurch wird auch eine Druckmesserreduzierung erreicht.

Vorzugsweise können die Anschlußstücke mit einer umlaufenden Klemmschelle für den Anschlußbund verbunden sein. Die Anschlußstücke können auch mit der Klemmschelle als integriertes Mehrkomponentenbauteil ausgeführt sein. Alle diese Maßnahmen dienen im wesentlichen zur Vereinfachung der Montage.

Weitere vorteilhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind. Es zeigt:
Fig. 1 in räumlicher Darstellungsweise ein Gelenkgehäuse mit einer daran angebrachten Achsmanschette,
Fig. 2 die Achsmanschette nach Fig. 1 mit den zugehörigen Ausgleichsstücken in teilweise aufgeschnittener Darstellung,
Fig. 3 die Achsmanschette nach den Fig. 1 und 2 in räumlicher Darstellung,
Fig. 4 die Achsmanschette nach Fig. 3 mit daran angelegten Ausgleichsstücken,
Fig. 5 die Achsmanschette nach Fig. 3 mit ringförmig miteinander verbundenen Ausgleichsstücken,
Fig. 6 die ringförmig miteinander verbundenen Ausgleichsstücke gemäß Fig. 5 und
Fig. 7 die ringförmig miteinander verbundenen Ausgleichsstücke gemäß Fig. 5 und 6, wobei die die Ausgleichsstücke verbindenden Ringabschnitte mäanderförmig ausgebildet sind.

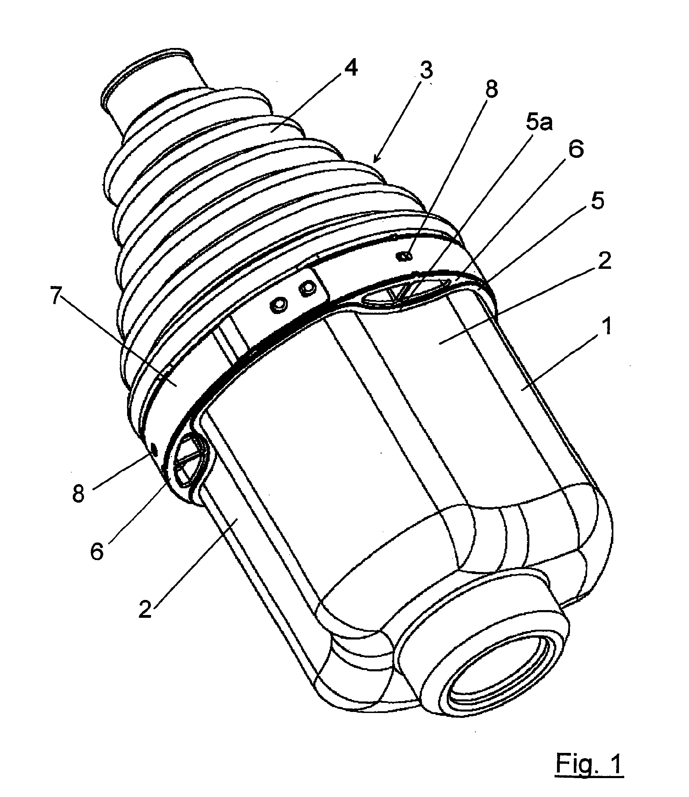

In Fig. 1 ist ein aus Metall bestehendes Gelenkgehäuse 1 eines Gelenks im Antriebsstrang eines Kraftfahrzeugs dargestellt. Die Außenkontur des Gelenkgehäuses 1 weist mehrere, beim dargestellten Ausführungsbeispiel drei radiale Vertiefungen 2 auf. Eine aus einem thermoplastischen Copolyester (TPE) bestehende Achsmanschette 3 weist einen rotationssymmetrischen Faltenbalg 4 auf und dient zur Abdichtung des Gelenks im Antriebsstrang des Kraftfahrzeugs.

Ein Anschlußbund 5 der Achsmanschette 3 ist einstückig mit dem Faltenbalg 4 ausgeführt. Der Anschlußbund 5 weist mehrere nach innen vorspringende Einbuchtungen 5a auf, die an die radialen Vertiefungen 2 der Außenkontur des Gelenkgehäuses 1 angepaßt sind.
An der Außenseite des Anschlußbundes 5 sind mehrere, beim dargestellten Ausführungsbeispiel drei Ausgleichsstücke 6 jeweils an der Außenseite der Einbuchtungen 5a angesetzt. Die Ausgleichsstücke 6 ergänzen die Außenkontur des Anschlußbundes 5 zu einer zylindrischen Umfangsfläche, um die eine aus Metall oder Kunststoff bestehende Klemmschelle 7 gespannt ist, um den Anschlußbund 5 dichtend gegen die Außenfläche des Gelenkgehäuses 1 zu drücken.

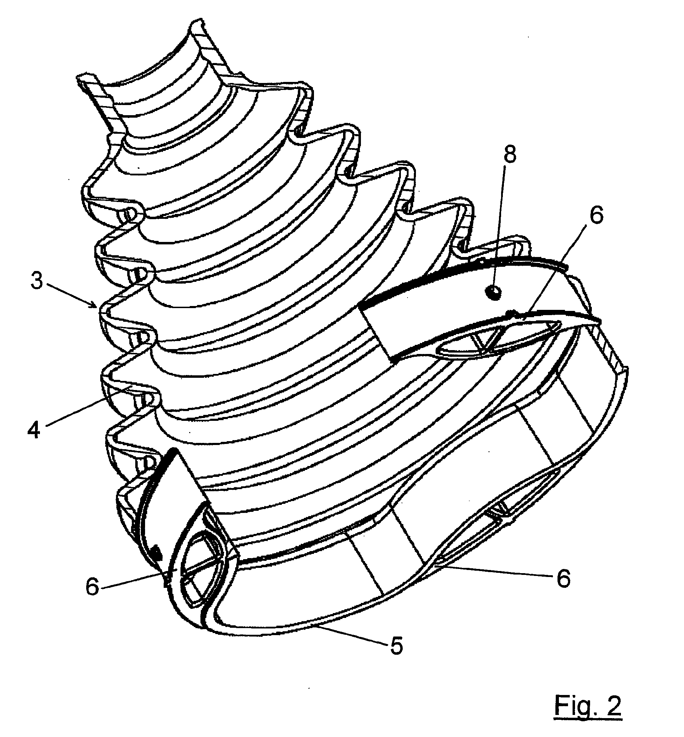

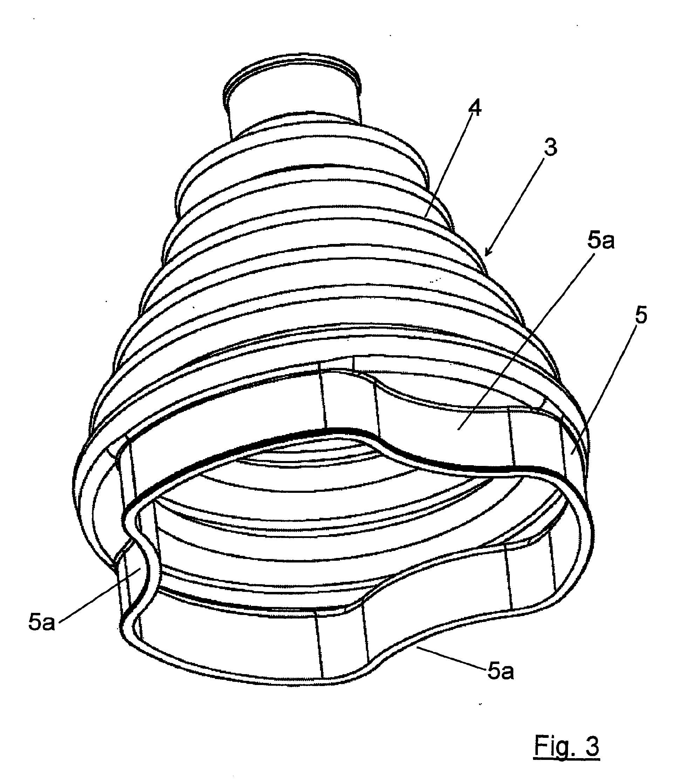

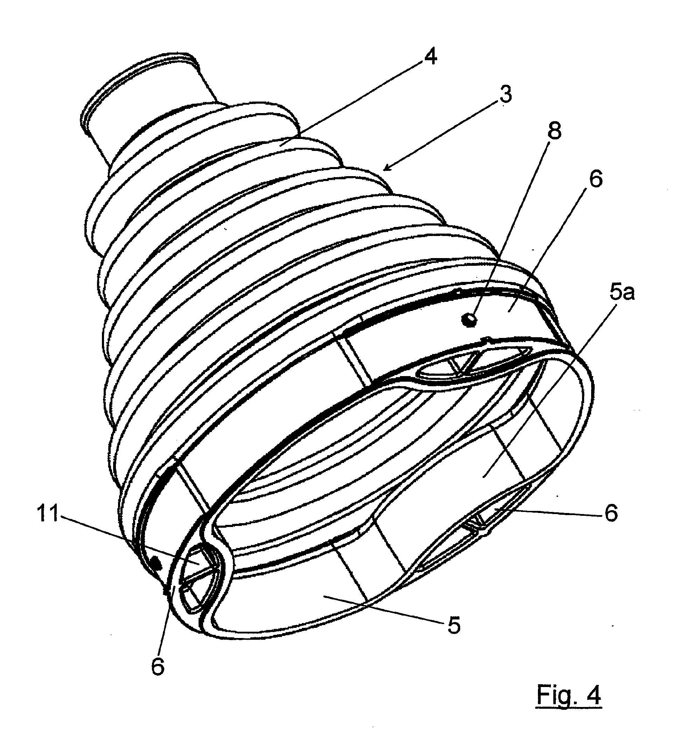

Bei dem in den Fig. 1-4 dargestellten Ausführungsbeispiel sind die drei einzelnen Ausgleichsstücke 6 mit der Klemmschelle 7 verbunden, beispielsweise durch Niete 8.

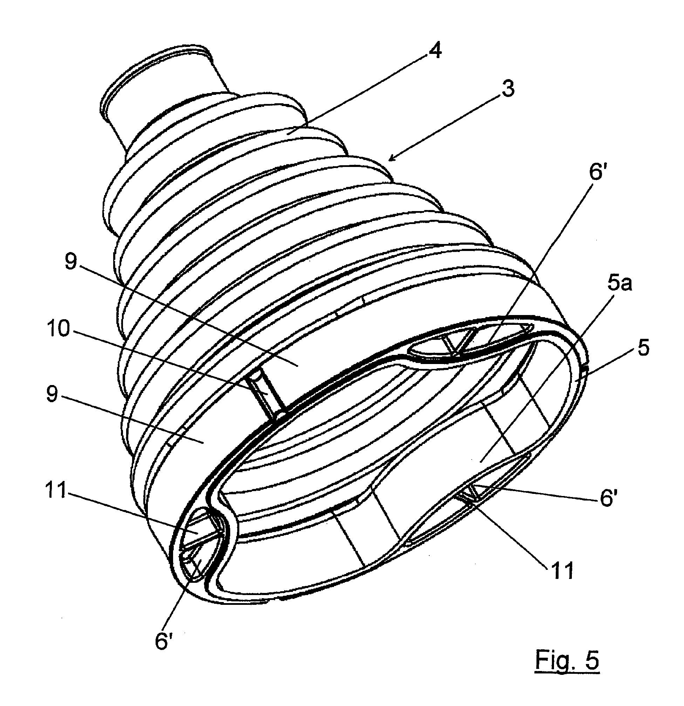

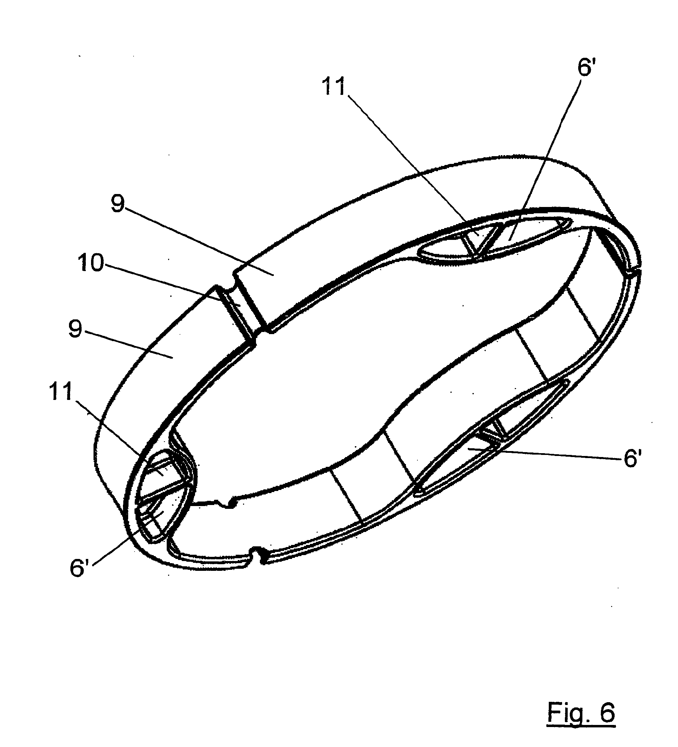

Abweichend hiervon sind beim Ausführungsbeispiel gemäß den Fig. 5 und 6 die Ausgleichsstücke 6' durch Ringabschnitte 9 und Biegegelenke 10 zu einem einstückigen Bauteil (Fig. 6) verbunden, das sich um den gesamten Umfang des Anschlußbundes 5 erstreckt.

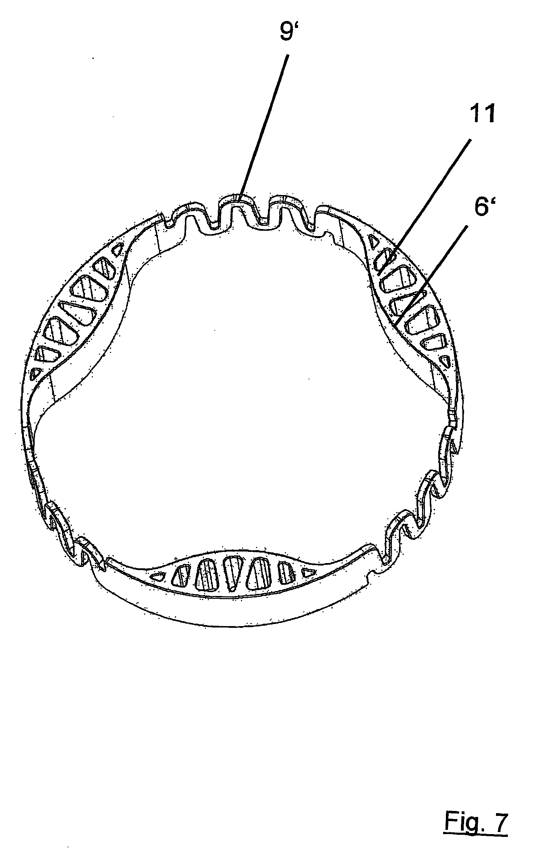

Abweichend von Fig. 6 sind beim Ausführungsbeispiel gemäß Fig. 7 die Ausgleichsstücke 6` durch Ringabschnitte 9`, die mäanderförmig ausgeführt sind, zu einem einstückigen Bauteil verbunden, das sich um den gesamten Umfang des Anschlussbundes 5 erstreckt. An dieser Ausführung ist vorteilhaft, dass die einander in Umfangsrichtung benachbarten Ausgleichsstücke durch Ringabschnitte verbunden sind, die in Umfangsrichtung elastisch nachgiebig ausgebildet sind. Der Ring, umfassend die Ausgleichsstücke 6, 6` und die Ringabschnitte 9, 9`, kann positive und negative Umfangsänderungen, wie sie bei der Montage auftreten, bruchfrei und mit geringer erforderlicher Formänderungskraft ausgleichen.

Abweichend von den dargestellten Ausführungsbeispielen können die Ausgleichsstücke 6 auch mit der Klemmschelle 7 als integriertes Mehrkomponentenbauteil ausgeführt sein.

Bei den dargestellten Ausführungsbeispielen weisen die Ausgleichsstücke 6 bzw. 6' jeweils einen radialen Stützsteg 11 auf, der zur Übertragung der Anpreßkraft von der Klemmschelle 7 auf den Anschlußbund 5 dient. Abweichend hiervon können auch mehrere Stützstege die Anpresskraft in einer Fachwerkstruktur übertragen. Darüber hinaus können die Ausgleichsstücke auch fluidgefüllte Hohlkörper mit flexibler Wandung sein. Es ist auch möglich, die Ausgleichsstücke als Mehrkomponentenbauteile aus unterschiedlich harten Materialkomponenten auszuführen, um eine sehr homogene Druckverteilung zwischen dem Anschlußbund 5 und dem Gelenkgehäuse 1 zu erreichen. Dem gleichen Zweck dient die mögliche Ausführung der Ausgleichsstücke als Mehrkomponentenbauteile aus unterschiedlich harten Materialkomponenten.

## Patentansprüche

1. Achsmanschette zur Gelenkabdichtung, insbesondere am Antriebsstrang von Kraftfahrzeugen, mit einem im wesentlichen rotationssymmetrischen Faltenbalg, der mit einem Anschlußbund einstückig ausgeführt ist, und mit am Anschlußbund verteilt angesetzten Ausgleichsstücken zur Anpassung an eine, mehrere radiale Vertiefungen aufweisende Außenkontur eines Gelenkgehäuses, **dadurch gekennzeichnet, dass** der Anschlußbund (5) mehrere, nach innen vorspringende Einbuchtungen (5a) aufweist, die an die radialen Vertiefungen (2) der Außenkontur des Gelenkgehäuses (1) angepaßt sind, und dass die Ausgleichsstücke (6, 6') an der Außenseite des Anschlußbundes (5) angesetzt sind und dessen Außenkontur zu einer zylindrischen Umfangsfläche ergänzen.

2. Achsmanschette nach Anspruch 1 **dadurch gekennzeichnet, dass** die Umfangslänge jedes Ausgleichsstücks (6) angenähert der Umfangslänge der zugeordneten radialen Vertiefung (2) entspricht.

3. Achsmanschette nach einem der Ansprüche 1 oder 2, **dadurch gekennzeichnet, dass** alle Ausgleichsstücke (6') zusammenhängend als ein sich um den gesamten Umfang des Anschlußbundes (5) erstreckendes einstückiges Bauteil ausgeführt sind.

4. Achsmanschette nach einem der Ansprüche 1 bis 3, **dadurch gekennzeichnet, dass** die einander in Umfangsrichtung benachbarten Ausgleichsstücke (6, 6`) durch Ringabschnitte (9, 9`) verbunden sind und dass zumindest einer der Ringabschnitte (9, 9`) in Umfangsrichtung elastisch nachgiebig ausgebildet ist.

5. Achsmanschette nach Anspruch 4, **dadurch gekennzeichnet, dass** der Ringabschnitt (9, 9') mäanderförmig ausgebildet ist.

6. Achsmanschette nach einem der Ansprüche 1 bis 5, **dadurch gekennzeichnet, dass** die Ausgleichsstücke (6) mit einer umlaufenden Klemmschelle (7) für den Anschlußbund (5) verbunden sind.

7. Achsmanschette nach Anspruch 6, **dadurch gekennzeichnet, dass** die Ausgleichsstücke (6) mit der Klemmschelle (7) als integriertes Mehrkomponentenbauteil ausgeführt sind.

8. Achsmanschette nach einem der Ansprüche 1 bis 7, **dadurch gekennzeichnet, dass** die Ausgleichsstücke (6, 6') als Mehrkomponentenbauteile aus unterschiedlich harten Materialkomponenten ausgeführt sind.

9. Achsmanschette nach einem der Ansprüche 1 bis 8, **dadurch gekennzeichnet, dass** die Ausgleichsstücke (6, 6') als fluidgefüllte Hohlkörper mit flexibler Wandung ausgeführt sind.

10. Achsmanschette nach einem der Ansprüche 1 bis 9, **dadurch gekennzeichnet, dass** der Faltenbalg aus einem thermoplastischen Copolyester (TPE) besteht.
